# FASCICULE DE BREVET EUROPEEN

(11) **EP 4 312 874 B1**
(45) Date de publication et mention de la délivrance du brevet: **04.02.2026**
(21) Numéro de dépôt: 22717637.7
(22) Date de dépôt: 24.03.2022
(51) Int. Cl.: A61C 13/00, A61C 13/01, A61C 13/10, A61C 13/20, A61C 13/267, A61C 13/34, B33Y 80/00, A61C 13/36

(54) **PROCÉDÉ DE FABRICATION D'UNE PROTHÈSE DENTAIRE ET MOULE EN COQUILLES CONFIGURÉ POUR METTRE EN OEUVRE LE PROCÉDÉ**
VERFAHREN ZUR HERSTELLUNG EINER ZAHNPROTHESE UND SCHALENFORM ZUR DURCHFÜHRUNG DES VERFAHRENS
METHOD FOR MANUFACTURING A DENTAL PROSTHESIS AND SHELL MOULD CONFIGURED TO CARRY OUT THE METHOD

(30) Priorité: 25.03.2021 FR 2103049
(43) Date de publication de la demande: 07.02.2024
(73) Titulaire: Circle Anatoscope Intuitive Design, 13300 Salon de Provence (FR)
(72) Inventeur: SIREIX, Christophe, 74250 BOGEVE (FR); FOREST, Alexandre, 30127 BELLEGARDE (FR); LENOIR, Sébastien, 13008 MARSEILLE (FR)
(74) Mandataire: Santarelli
(86) Numéro de dépôt international: PCT/FR2022/050551
(87) Numéro de publication internationale: WO 2022/200741

(56) Documents cités:
- WO-A1-98/53756
- DE-A1- 10 241 857
- US-A- 2 107 181
- US-A- 2 171 736
- US-A1- 2014 272 787
- US-A1- 2020 146 791

## Description

La présente invention concerne un procédé de fabrication d'une prothèse dentaire, par exemple une prothèse dentaire amovible, complète ou partielle (plus communément appelée "stellite").

Elle concerne également un moule en coquilles configuré pour mettre en œuvre un tel procédé.

Une prothèse dentaire désigne ici un appareil de remplacement d'au moins certaines des dents naturelles.

Une prothèse dentaire amovible est une prothèse qui peut être retirée de la bouche par exemple pour son entretien quotidien ou pour dormir.

Une prothèse dentaire "complète", aussi appelée dentier, désigné une prothèse qui remplace la totalité des dents, que ce soit de la mâchoire supérieure pour un dentier du haut ou de la mâchoire inférieure pour un dentier du bas.

Une prothèse dentaire "partielle" est utilisée lorsqu'il ne s'agit que de remplacer une dent, ou quelques une des dents, mais pas la totalité.

Une prothèse partielle comprend ainsi traditionnellement un châssis métallique, ou stellite, servant à soutenir des dents artificielles qui se positionnent à l'emplacement des édentations. Ce châssis métallique (usuellement à base de chrome - cobalt - molybdène), rigide, s'appuie à la fois sur les dents restantes et sur les muqueuses, principalement les gencives.

Une prothèse dentaire peut également être maintenue en place dans la bouche par au moins un implant. Un implant est un élément métallique, possiblement fixé via une vis, dans l'os, afin de remplacer la racine dentaire d'une dent.

La fabrication de prothèses dentaires nécessite la mise en œuvre d'un protocole comprenant une succession d'étapes de grande précision, parmi lesquelles une étape dite de mise en moufle. Cette étape consiste à prendre l'empreinte d'une maquette de prothèse réalisée en cire, dans un moule en deux parties séparables, appelé moufle. La maquette est réalisée manuellement par un prothésiste et comporte des dents artificielles disposées les unes après les autres sur la maquette.

Dans certains cas, la prise d'empreinte est réalisée en coulant du plâtre à l'intérieur du moufle. Lorsque le plâtre est solidifié, le moufle est ébouillanté et la cire, en fondant, est éliminée et laisse une empreinte dans le plâtre. Un refroidissement du moule en plâtre est nécessaire avant de couler un matériau, généralement une résine, dans l'empreinte dans laquelle des dents artificielles ont été préalablement disposées.

Dans d'autres cas, la prise d'empreinte est réalisée en coulant un gel à l'intérieur du moufle. Lorsque le gel est solidifié, la maquette en cire peut alors être retirée manuellement sans phase d'ébouillantage. Cependant, les dents artificielles doivent être séparées de la maquette en cire avant d'être positionnées dans l'empreinte formée par le gel. En outre, les dents artificielles sont généralement ébouillantées afin d'éliminer les résidus de cire.

Cette étape de mise en moufle, notamment les sous-étapes de solidification du plâtre, d'ébouillantage du moufle, de refroidissement ou bien de séparation des dents artificielles de la maquette en cire sont chronophages et retardent considérablement la réalisation effective de la prothèse.

Le document US2020146791A1 décrit un procédé de fabrication d'une prothèse dentaire, comprenant
- une étape de conception numérique d'un modèle de prothèse dentaire à réaliser à partir d'un modèle de réplique de dentition d'un patient;
- une étape de fabrication par impression 3D de la partie la mâchoire
- une étape de réalisation d'une empreinte de la base de la prothèse;
- une étape de coulée d'un matériau de remplissage dans un volume résiduel défini par l'empreinte de la base;
- une étape de positionnement de modèles de dents artificielles (en cire) dans la base, pour un surmoulage à la "cire perdue" des dents finales dans la base.

La présente invention vise donc à remédier, au moins en partie, à ces inconvénients.

Elle vise notamment à proposer un procédé permettant un gain de temps et de facilité de fabrication d'une prothèse dentaire.

A cet effet, l'invention concerne, selon un premier aspect, un procédé de fabrication d'une prothèse dentaire comportant :
- une étape de conception numérique d'un modèle de prothèse dentaire à réaliser à partir d'un modèle de réplique de dentition d'un patient ;
- une étape de génération d'un modèle de partie de mâchoire comportant le modèle de réplique de dentition et le modèle de prothèse dentaire assemblé au modèle de réplique de dentition;
- une étape de conception numérique d'un modèle d'organe de positionnement dans le modèle de réplique de dentition ;
- une étape de fabrication de la partie de mâchoire comportant un organe de positionnement à partir du modèle de partie de mâchoire incluant un modèle d'organe de positionnement ;
- une étape de fabrication de la réplique de dentition comportant un organe de positionnement à partir du modèle de réplique de dentition incluant le modèle d'organe de positionnement ;
- une étape de positionnement de la partie de mâchoire sur une coquille d'un moule en coquilles par coopération de l'organe de positionnement de la partie de mâchoire avec un organe de positionnement complémentaire ménagé dans ladite coquille ;
- une étape de fermeture du moule en coquilles ;
- une étape de réalisation d'une empreinte de la partie de mâchoire par injection d'un matériau dans le moule en coquilles ;
- une étape de positionnement d'au moins une dent artificielle dans l'empreinte de la partie de mâchoire ;
- une étape de positionnement de la réplique de dentition sur la coquille du moule en coquilles par coopération de l'organe de positionnement de la réplique de dentition avec l'organe de positionnement complémentaire de la coquille ;
- une étape de positionnement de la réplique de dentition dans l'empreinte dans laquelle l'au moins une dent artificielle est positionnée la réplique de dentition ne comblant que partiellement l'empreinte, de sorte à former un volume résiduel dans l'empreinte ; et
- une étape de coulée d'un matériau de remplissage dans le volume résiduel formé dans l'empreinte, l'au moins une dent artificielle et la réplique de dentition.

Un tel procédé de fabrication de prothèse dentaire selon l'invention permet ainsi un possible gain de temps en évitant des étapes telles que l'ébouillantage et le refroidissement du moufle.

En effet, la maquette de prothèse en cire est ici substituée par une partie de mâchoire fabriquée à partir d'un modèle conçu numériquement.

En pratique, la partie de mâchoire est fabriquée d'un seul tenant.

De ce fait, aucune dent artificielle n'a besoin d'être retirée ou ébouillantée puisque la partie de mâchoire est monobloc et n'est pas nécessairement réutilisée dans la suite du procédé, ce qui permet de positionner les dents artificielles directement après la prise d'empreinte et de s'abstenir des étapes habituelles d'ébouillantage ou de récupération des dents artificielles.

En outre, un matériau constitutif de la partie de mâchoire peut ensuite être recyclé pour permettre la fabrication d'autres prothèses dentaires ou d'autres produits. Il en est de même pour le matériau constitutif réplique de dentition, qui peut être fabriquée de la même manière que la partie de mâchoire.

Dans un exemple de mise en œuvre, l'étape de fabrication de la partie de mâchoire et l'étape de fabrication de la réplique de dentition sont réalisées simultanément.

Ainsi, la durée de réalisation de la prothèse peut être raccourcie.

Un procédé selon l'invention permet ainsi d'obtenir facilement et rapidement une prothèse dentaire réalisée au cas par cas, c'est-à-dire sur-mesure.

En outre, l'utilisation d'une réplique de dentition d'un patient pour la fabrication de la prothèse, et plus précisément lors de l'étape de coulée d'un matériau de remplissage, permet d'obtenir une adéquation entre la prothèse et l'environnement dans lequel elle est destinée à être insérée plus précise que les méthodes habituelles.

La présence d'un organe de positionnement sur la réplique de dentition, et par là même sur la partie de mâchoire, permet un positionnement plus précis de ces deux éléments sur la coquille du moule en coquilles via l'organe de positionnement complémentaire. Cela permet ainsi de positionner plus précisément la réplique de dentition à l'intérieur de l'empreinte de la partie de mâchoire.

L'organe de positionnement sert également, notamment lorsqu'il coopère avec l'organe de positionnement complémentaire, à maintenir la partie de mâchoire ou la réplique de dentition en place sur la coquille du moule en coquilles. Un tel organe de positionnement est par exemple formé sur une partie inférieure de la réplique de dentition.

Selon un exemple privilégié, l'organe de positionnement coopère selon une liaison glissière avec l'organe de positionnement complémentaire ménagé sur la coquille.

Par exemple, la coopération entre l'organe de positionnement et l'organe de positionnement complémentaire peut former un assemblage à queue d'aronde.

De cette manière, le déplacement de la partie de mâchoire ou de la réplique de dentition par rapport à la coquille est limité à la translation selon un seul axe défini par la liaison glissière. Il est alors possible d'ajuster la position en translation selon l'axe défini par la liaison glissière d'au moins l'une de la partie de mâchoire ou de la réplique de dentition.

Selon un autre exemple privilégié, l'organe de positionnement comporte une rainure configurée pour coopérer avec l'organe de positionnement complémentaire.

Selon un autre exemple privilégié, l'organe de positionnement complémentaire comporte une languette configurée pour coopérer avec l'organe de positionnement.

La rainure peut avoir une section polygonale et être configurée pour former une partie femelle d'un assemblage à queue d'aronde par coopération avec l'organe de positionnement complémentaire.

De même, la languette peut avoir une section configurée pour former une partie mâle de l'assemblage à queue d'aronde par coopération avec l'organe de positionnement. La languette a par exemple une section polygonale.

Selon une option intéressante, l'organe de positionnement complémentaire comporte en outre une butée axiale.

Par exemple, cette butée axiale peut permettre un arrêt en translation de la partie de mâchoire ou de la réplique de dentition lorsque l'organe de positionnement coopère avec l'organe de positionnement complémentaire selon la liaison glissière. Ainsi, la butée axiale forme un repère de positionnement de la partie de mâchoire et/ou de la réplique de dentition par rapport à la coquille. En effet, il est possible d'immobiliser la partie de mâchoire et/ou la réplique de dentition dans une position prédéterminée en la coulissant le long de l'axe défini par la liaison glissière jusqu'à la butée axiale.

Ainsi le positionnement de la partie de mâchoire sur la coquille est réalisé facilement et rapidement par un prothésiste ou tout autre praticien, en translatant la partie de mâchoire jusqu'à la butée. Au surplus, il est ainsi possible de positionner à l'identique la réplique de dentition sur la coquille en procédant de la même manière.

Dans un exemple de mise en œuvre, l'étape de fabrication de la réplique de dentition est précédée d'une étape de parallélisation du modèle de réplique de dentition, dans laquelle des zones de contre-dépouille du modèle de réplique de dentition sont comblées numériquement.

Ces zones de contre-dépouilles sont typiquement situées à la jonction entre les dents et les gencives.

Dans les procédés de l'état de la technique, il était nécessaire de combler manuellement ces zones de contre-dépouille avec de la cire.

Par conséquent, l'étape de réalisation est configurée pour minimiser, voire supprimer, les zones de contre-dépouille du modèle de réplique de dentition.

Ainsi, cette étape, réalisée numériquement, permet par la suite de fabriquer la réplique de dentition dans laquelle les zones dites parallélisées sont formées d'un seul tenant avec la réplique de dentition.

Cela est particulièrement avantageux lors de l'étape de réalisation de l'empreinte afin de démouler la partie de mâchoire sans endommager l'empreinte.

En outre, les zones de contre-dépouille sont possiblement comblées selon un axe d'insertion déterminé numériquement. L'axe d'insertion correspond à la direction selon laquelle la prothèse va être insérée dans la bouche du patient. L'axe d'insertion est généralement déterminé par le praticien, ou par un logiciel.

Selon un exemple de mise en œuvre particulier, l'étape de positionnement de l'empreinte sur la réplique de dentition est précédée d'une étape de positionnement d'un châssis de stellite sur la réplique de dentition.

Un châssis de stellite est particulièrement utile dans le cas d'une prothèse partielle, typiquement pour maintenir ensemble deux parties séparées de la prothèse.

Avantageusement, le châssis de stellite est solidarisé à la prothèse dentaire après la coulée du matériau de remplissage.

La mise en place du châssis de stellite est alors facile et rapide pour un praticien et garantit une adaptation optimale à l'environnement dans lequel il est destiné à être positionné.

Selon un autre exemple de mise en œuvre, le procédé comporte en outre une étape de perçage d'un canal d'alimentation débouchant dans l'empreinte.

Ce canal d'alimentation sert par la suite à la coulée du matériau de remplissage pour réaliser la prothèse dentaire. Dans un exemple intéressant, au moins deux canaux sont percés afin de permettre à la fois la coulée du matériau de remplissage et l'évacuation d'air présent dans l'empreinte.

Selon un exemple de mise en œuvre, l'étape de fabrication de la partie de mâchoire et/ou de la réplique de dentition est réalisée par fabrication additive.

Selon l'invention, "fabrication additive" désigne un procédé de fabrication d'ajout de matière, la plupart du temps assisté par ordinateur, appelé plus communément "Impression 3D". Les techniques de fabrication additive permettent par exemple une fabrication plus précise de la partie de mâchoire.

Ainsi, il est possible de s'abstenir de la fabrication manuelle d'une maquette en cire.

En outre, de par la précision de la fabrication additive, il peut être possible de se dispenser d'une étape de polissage qui est souvent chronophage et coûteuse et susceptible d'abîmer la pièce.

Ainsi, au moins dans certains cas, une prothèse dentaire à réaliser peut sortir directement prête à l'emploi d'un tel procédé, ou alors avec seulement un minimum d'étapes de post-traitement, par exemple pour obtenir un aspect poli-miroir sur certaines surfaces de la prothèse dentaire.

Selon un exemple de mise en œuvre, l'étape de fabrication de la partie de mâchoire et/ou de la réplique de dentition est réalisée selon un procédé comprenant une succession d'ajouts de matériau par jets sur un support d'impression, en couches successives, le matériau étant solidifié par photopolymérisation après chaque jet.

Par exemple la partie de mâchoire peut être fabriquée à partir d'un monomère, d'un polymère ou d'une résine photopolymérisable. De préférence, la partie de mâchoire est fabriquée à partir de PA 12 (pour polyamide 12, également appelé Nylon 12).

En effet, le PA 12 présente des capacités intéressantes de recyclage de la poudre non fondue après la mise en œuvre du procédé de fabrication additive tel que décrit ici, et permet ainsi de réutiliser cette poudre afin de réaliser d'autres prothèses ou même d'autres produits.

Est également proposé, selon un autre aspect, un moule en coquilles de fabrication d'une prothèse dentaire, dans lequel une coquille comporte un fond définissant une surface plane et un organe de positionnement complémentaire disposé sur le fond et étant configuré pour coopérer avec un organe de positionnement d'un insert à positionner sur le fond du moule en coquilles, caractérisé en ce que ledit organe de positionnement complémentaire est configuré pour former un assemblage à queue d'aronde avec ledit organe de positionnement empêchant un mouvement de l'insert dans une direction hors plan, et en ce que l'organe de positionnement complémentaire comporte une butée axiale.

Un tel moule est ainsi notamment configuré pour mettre en œuvre un procédé tel que décrit ci-dessus.

Dans le cadre de l'invention, un "moule en coquilles" désigne un moule formé par au moins deux parties coopérant entre elles, chaque partie étant alors appelée « coquille ».

Un insert correspond ici à toute pièce permettant de mettre en œuvre au moins certaines des étapes de prise d'empreinte, de moulage ou de surmoulage en vue de la réalisation d'une prothèse dentaire. Par exemple, selon l'invention, l'insert peut être une réplique de dentition d'un patient ou bien une partie de mâchoire.

Un tel moule en coquilles présente ainsi des avantages analogues à ceux décrits ci-dessus en lien avec le procédé.

L'organe de positionnement complémentaire est configuré pour former une liaison glissière avec l'organe de positionnement de l'insert.

En particulier, l'organe de positionnement complémentaire est par exemple configuré pour former une partie mâle de l'assemblage à queue d'aronde.

Selon un mode de réalisation, l'organe de positionnement complémentaire comporte une languette configurée pour coopérer avec l'organe de positionnement.

En particulier, la butée axiale peut être formée par une surface saillante, s'étendant saillie transversalement à la direction longitudinale de la languette servant de guide en translation, par exemple perpendiculairement de part et d'autre de la languette, de sorte que l'organe de positionnement complémentaire a une forme de T.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
- La figure 1 montre un exemple de modèle de réplique de dentition d'un patient selon un mode de mise en œuvre de l'invention ;
- La figure 2A montre une vue avant, en plongée, de l'exemple de modèle de réplique de dentition d'un patient de la figure 1, avec un organe de positionnement ;
- La figure 2B montre une vue arrière, sensiblement en contre-plongée, du modèle de réplique de dentition de la figure 2A ;
- La figure 3A montre un exemple de modèle de partie de mâchoire, en plongée, tel qu'obtenu à partir de l'exemple de réplique de dentition des figures 2A et 2B, selon un mode de mise en œuvre de l'invention ;
- La figure 3B montre une vue arrière, sensiblement en contre-plongée, de l'exemple de modèle de partie de mâchoire de la figure 3A ;
- La figure 4 montre un positionnement d'une partie de mâchoire, réalisée à partir du modèle de partie de mâchoire des figures 3A et 3B, sur une coquille d'un moule en coquilles, selon un exemple de mise en œuvre de l'invention ;
- La figure 5 illustre, par une vue en perspective, une étape de fermeture du moule en coquilles avec la partie de mâchoire positionnée sur l'une des coquilles, comme illustré figure 4 ;
- La figure 6 montre une empreinte de la partie de mâchoire réalisée dans le moule en coquilles et une étape de formation d'un canal d'alimentation ;
- La figure 7 montre une étape de positionnement d'une dent artificielle dans l'empreinte de la figure 6 ;
- La figure 8 montre une étape de positionnement d'une réplique de dentition, réalisée à partir du modèle de réplique de dentition des figures 2A et 2B, sur la coquille du moule en coquilles de la figure 4 ;
- La figure 9 illustre par une vue en perspective, une étape de fermeture du moule en coquilles avec la réplique de dentition positionnée sur l'une des coquilles comme illustrée à la figure 8 ;
- La figure 10 montre une étape de coulée d'un matériau de remplissage à l'intérieur du moule en coquilles fermé, comportant la réplique de dentition telle que représentée aux figures 8 et 9 ;
- La figure 11 montre une prothèse dentaire obtenue selon un exemple de mise en œuvre de l'invention ; et
- La figure 12 présente schématiquement un procédé de fabrication d'une prothèse dentaire selon un exemple de mise en œuvre de l'invention.

Les éléments identiques représentés sur les figures précitées sont identifiés par des références numériques identiques.

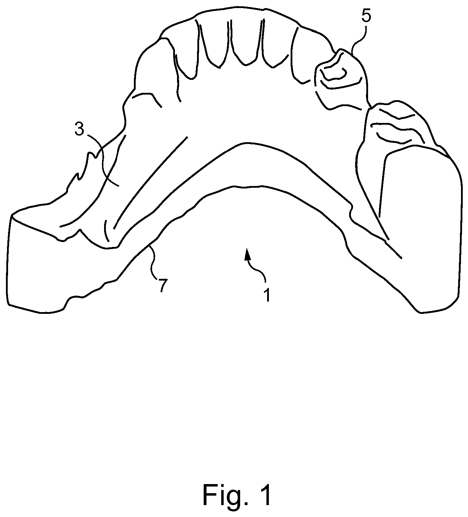

La figure 1 représente un modèle de réplique de dentition 1 d'un patient.

Un tel modèle est par exemple obtenu à partir d'une étape de prise d'empreinte numérique (non illustrée) effectuée sur un modèle en plâtre grâce à un scanner de table ou, de préférence, directement grâce à un scanner intrabuccal dans la bouche du patient.

Le modèle de réplique de dentition 1 correspond ainsi à une représentation numérique d'une partie de la mâchoire d'un patient, en l'occurrence une partie de mâchoire inférieure, pour laquelle une prothèse dentaire doit être réalisée.

Ce modèle de réplique de dentition 1 est généralement stocké dans un fichier au format STL et affiché à partir d'un logiciel de conception assistée par ordinateur.

Le modèle de réplique de dentition 1 comporte par exemple une partie dite haute formant principalement une partie dents, et une partie dite basse formant principalement une partie gencive.

Le modèle de réplique de dentition 1 comporte en outre une partie antérieure, ou partie linguale, représentant une face interne concave.

Dans l'exemple illustré, le modèle de réplique de dentition 1 comporte, en partie haute, au moins une édentation 3.

En outre, dans l'exemple illustré, le modèle de réplique de dentition 1 comporte au moins une dent restante 5. La prothèse dentaire à réaliser est dans ce cas une prothèse dentaire partielle.

Bien entendu, la présente invention n'est pas limitée à ce type de prothèse dentaire et s'applique également à d'autres types de prothèses, par exemple, à une prothèse dentaire complète, c'est-à-dire pour laquelle le modèle de réplique de dentition ne comporterait aucune dent 5.

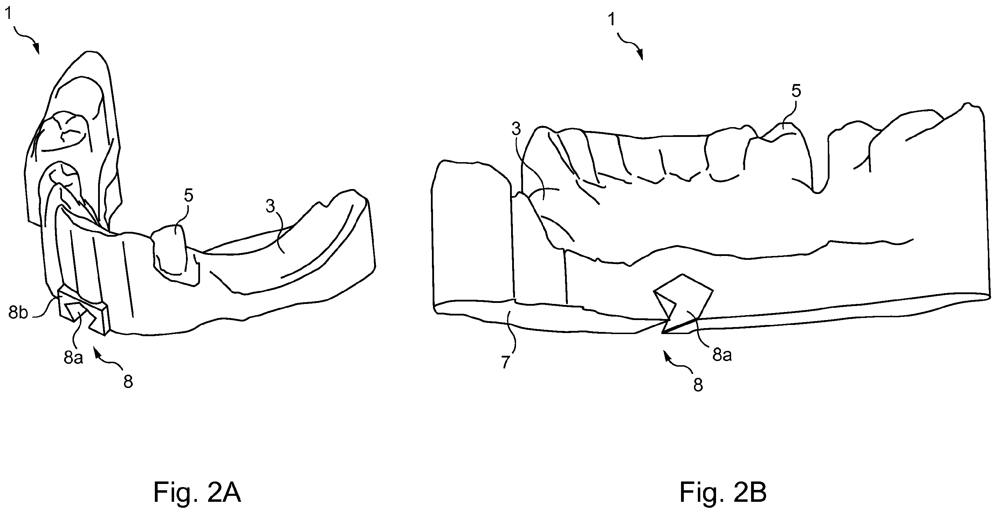

Comme illustré en figures 2A et 2B, le modèle de réplique de dentition 1 comporte également une partie frontale, représentant une face externe convexe. La partie frontale est ainsi opposée à la partie antérieure, et la distance les séparant constitue l'épaisseur du modèle de réplique de dentition 1.

Le modèle de réplique de dentition 1 comporte en outre en partie basse, une surface inférieure 7.

Cette surface, une fois le modèle de réplique de dentition 1 fabriqué, est configurée pour le positionner de façon stable sur un support.

La surface inférieure 7 de la partie basse du modèle de réplique de dentition 1 définit par exemple un plan.

Les figures 2A et 2B montrent également un modèle d'organe de positionnement 8, ménagé dans le modèle de réplique de dentition 1, au niveau de sa partie inférieure. En particulier, le modèle d'organe de positionnement 8 est ménagé à partir de la surface inférieure 7 du modèle de réplique de dentition 1.

Dans l'exemple représenté, le modèle d'organe de positionnement 8 comporte une rainure 8a. La rainure 8a est configurée pour former une liaison glissière avec un organe complémentaire.

En effet, la rainure 8a s'étend selon un axe longitudinal entre la partie antérieure et la partie frontale du modèle de réplique de dentition 1. La rainure 8a présente ici une section trapézoïdale qui n'autorise, par coopération avec un organe complémentaire, uniquement le déplacement selon un axe longitudinal de la rainure 8a.

Dans l'exemple représenté aux figures 2A et 2B, la rainure 8a est creusée à partir de la surface inférieure 7 du modèle de réplique de dentition 1. La rainure 8a s'étend parallèlement au plan défini par la surface inférieure 7, sur au moins une partie de l'épaisseur du modèle de réplique de dentition 1. A la figure 2B par exemple, la rainure 8a s'étend depuis la partie antérieure jusqu'à la partie frontale du modèle de réplique de dentition 1, c'est-à-dire sur la totalité de l'épaisseur du modèle de réplique de dentition 1. Autrement dit, la rainure 8a est traversante. Dans le présent exemple de réalisation, le modèle d'organe de positionnement 8 comporte également un élément de butée ou butée 8b configurée pour arrêter le déplacement en translation du modèle de réplique de dentition 1. Selon une option intéressante, la butée est formée par la partie frontale du modèle de réplique de dentition 1. Dans le présent exemple de réalisation, la butée 8b comporte une protubérance s'étendant depuis la partie frontale du modèle de réplique de dentition 1. La protubérance de la butée 8b comporte une surface plane, perpendiculaire à l'axe longitudinale de la rainure 8a.

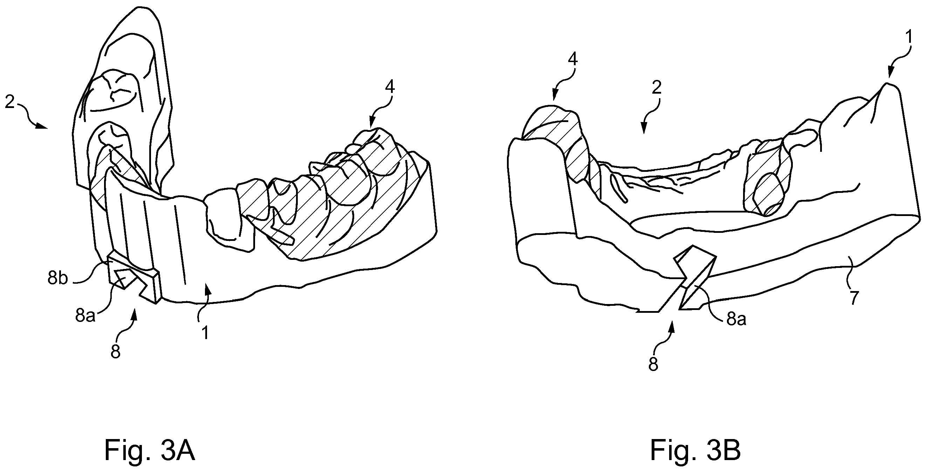

La figure 3A et la figure 3B montrent un modèle de partie de mâchoire 2 comprenant le modèle de réplique de dentition 1 illustré aux figures 2A et 2B et un modèle de prothèse dentaire 4, représenté en hachuré, assemblé par conception numérique au modèle de réplique de dentition 1.

Le modèle de prothèse dentaire 4 est conçu numériquement à partir du modèle de réplique de dentition 1. Un profil et une forme du modèle de prothèse sont déterminés en fonction du modèle de réplique de dentition 1 afin de s'y adapter au mieux. Le profil du modèle de prothèse dentaire 4 est également déterminé en fonction d'un axe d'insertion, c'est-à-dire de la trajectoire pour insérer le modèle de prothèse dentaire par simulation dans la bouche du patient. Cet axe d'insertion est par exemple déterminé par le prothésiste ou par le logiciel.

De ce fait, le modèle de prothèse dentaire 4 comporte typiquement au moins une dent, et éventuellement une partie de gencive en fonction du modèle de réplique de dentition 1, de sorte à former un modèle de partie de mâchoire 2 avec une dentition corrigée et complète.

Dans le cas d'une prothèse dentaire partielle, le modèle de prothèse dentaire 4 peut comporter un modèle de châssis de stellite (non représenté) configuré pour prendre appui sur au moins une dent restante 5 et/ou sur une muqueuse, en particulier les gencives, et/ou de maintenir ensemble au moins deux parties séparées du modèle de prothèse dentaire.

On comprend qu'une partie inférieure du modèle de partie de mâchoire 2 correspond en tous points à la partie inférieure du modèle de réplique de dentition 1. En effet, seule la partie hachurée représentée sur le modèle de partie de mâchoire 2 diffère du modèle de réplique de dentition 1. Ainsi, le modèle de partie de mâchoire 2 comporte également la surface inférieure 7 au niveau de sa partie inférieure. Par conséquent, le modèle de partie de mâchoire 2 comprend également le modèle d'organe de positionnement 8, comportant ici la rainure 8a et la butée 8b, identique à l'organe de positionnement du modèle de réplique de dentition 1.

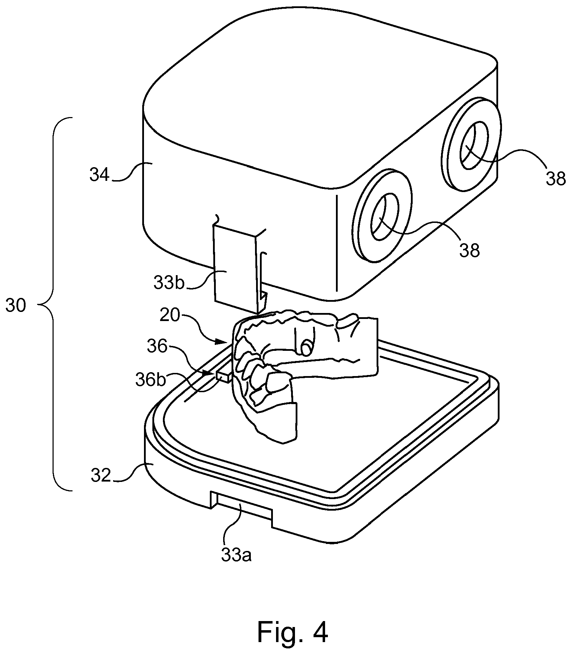

La figure 4 illustre une étape de positionnement de la partie de mâchoire 20 sur une coquille 32 d'un moule en coquilles 30. Le moule en coquilles 30 comporte ici deux coquilles : la coquille 32 et une coquille complémentaire 34 qui est configurée pour coopérer avec la coquille 32 pour fermer le moule en coquilles 30.

Pour cela, la coquille 32 et la coquille complémentaire 34 comportent respectivement une encoche 33a et un crochet 33b. Le crochet 33b est configuré pour coopérer avec l'encoche 33a pour maintenir le moule en coquilles 30 fermé. Bien entendu, tout autre moyen de fermeture du moule en coquilles 30 peut être envisagé, comme par exemple des élastiques.

La coquille 32 présente un fond 35. Le fond 35 définit ici une surface plane. La surface plane formée par le fond 35 est destinée à recevoir la partie de mâchoire 20 du côté de sa surface inférieure 7.

Selon l'exemple représenté, des trous de coulée 38 sont ménagés dans la coquille complémentaire 34 afin de remplir le moule en coquilles 30 d'un matériau en vue de la réalisation d'une empreinte d'un insert.

Le matériau pour réaliser l'empreinte est un gel hydrocolloïde.

Un tel moule en coquilles 30 constitue par exemple un moufle dentaire.

La figure 4 montre également un exemple de réalisation de partie de mâchoire 20, réalisée à partir du modèle de partie de mâchoire 2 représenté aux figures 3A et 3B.

La partie de mâchoire 20 est par exemple réalisée par fabrication additive. Par exemple, la partie de mâchoire 20 est réalisée à partir de PA 12, ou bien à partir de résine photopolymérisable. Dans l'exemple de mise en œuvre décrit ici, la partie de mâchoire 20 est fabriquée en un seul bloc.

L'étape de fabrication de la partie de mâchoire 20 peut comporter en outre, par exemple, une sous-étape de finition. Cependant, les pièces réalisées par fabrication additive ne nécessitent généralement que très peu de finitions, voire aucune ; une telle étape de finition est donc optionnelle.

Selon un aspect intéressant de l'invention, la coquille 32 comporte un organe de positionnement complémentaire 36.

L'organe de positionnement complémentaire 36 de la coquille 32 est configuré pour coopérer avec un organe de positionnement ménagé dans un insert dont le surmoulage est à réaliser, pour former une liaison glissière. Dans l'exemple de réalisation représenté, l'organe de positionnement complémentaire 36 forme la partie mâle d'un assemblage à queue d'aronde.

L'organe de positionnement complémentaire 36 comprend une butée axiale 36b pour arrêter le déplacement en translation de la partie de mâchoire 20 lors de la coopération de l'organe de positionnement complémentaire 36 avec l'organe de positionnement 28. De manière générale dans la présente description, un "insert" désigne alors un objet destiné à être inséré dans un moule pour être surmoulé.

Dans le cadre du présent exemple, l'insert considéré est donc la partie de mâchoire 20.

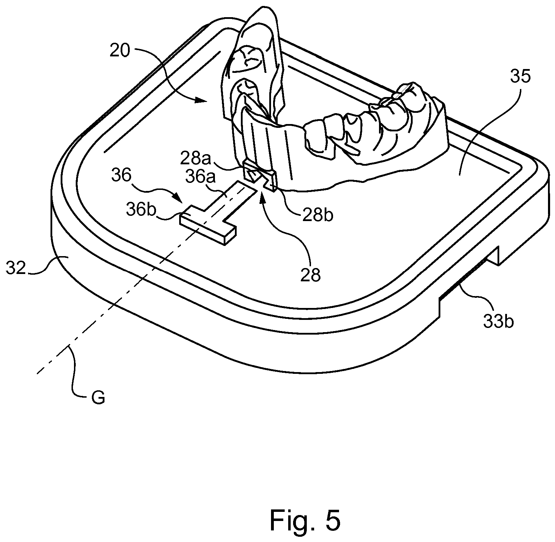

Comme le montre la figure 5, la partie de mâchoire 20 inclut un organe de positionnement 28. L'organe de positionnement 28 est réalisé à partir du modèle de l'organe de positionnement 8. En l'occurrence, l'organe de positionnement 28 comporte ici une rainure 28a. Selon l'exemple représenté, l'organe de positionnement 28 comporte également une butée 28b formé au niveau de la partie frontale de la partie de mâchoire 20.

L'organe de positionnement complémentaire 36 de la coquille 32 est donc configuré pour coopérer avec l'organe de positionnement 28 de la partie de mâchoire 20.

L'organe de positionnement complémentaire 36 est situé sur le fond 35 de la coquille 32. En particulier, l'organe de positionnement complémentaire 36 fait saillie depuis le fond 35 de la coquille 32.

Selon l'exemple représenté, l'organe de positionnement complémentaire 36 comprend ici une languette 36a, laquelle est de forme complémentaire à celle de la rainure 28a. La languette 36a présente par exemple une section complémentaire à la section de la rainure 28a.

La languette 36a est en saillie depuis le fond 35 de la coquille 32. La languette s'étend longitudinalement selon l'axe G représenté sur la figure 5. L'axe longitudinal G de la languette 36a est parallèle à la surface plane formée par le fond 35 de la coquille 32 de sorte que le mouvement de translation obtenu lors de la coopération entre la languette 36a et la rainure 28a s'effectue parallèlement à la surface plane formée par le fond 35 de la coquille 32.

Ainsi, lors de la coopération entre l'organe de positionnement 28 et l'organe de positionnement complémentaire 36, la partie de mâchoire 20 est déplacée parallèlement à la surface plane du fond 35 de la coquille 32.

Dans l'exemple de réalisation représenté, la rainure 28a forme la partie femelle d'un assemblage à queue d'aronde. La rainure 28a comporte par exemple une section polygonale, et plus précisément trapézoïdale. Dans l'exemple de réalisation représenté, la languette 36a forme la partie mâle d'un assemblage à queue d'aronde.

L'assemblage à queue d'aronde sert ici à empêcher le mouvement de la partie de la mâchoire 20 dans une direction hors plan, par exemple orthogonale à la surface plane du fond 35 de la coquille 32, et à maintenir en position la partie de mâchoire 20 par exemple lors de la séparation de la coquille complémentaire 34 et de la coquille 32 après une étape de réalisation d'une empreinte décrite plus en détails ci-après.

Bien entendu, la rainure 28a de l'organe de positionnement 28 et/ou la languette 36a de l'organe de positionnement complémentaire 36 selon l'invention peuvent être de toute autre forme dès lors qu'elles permettent une coopération selon une liaison glissière. Ainsi, dans un mode de réalisation non représenté, l'organe de positionnement 28 comporte une languette faisant saillie par rapport à la surface inférieure de la partie de mâchoire et l'organe de positionnement complémentaire comporte une rainure de section complémentaire à la languette de l'organe de positionnement. Selon l'exemple représenté, la butée axiale 36b est configurée pour coopérer avec l'organe de positionnement 28 et plus particulièrement avec la partie frontale de la partie de mâchoire 20, éventuellement avec la butée 28b de l'organe de positionnement 28. Cette butée axiale 36b forme également un repère de positionnement de la partie de mâchoire 20 sur la coquille 32.

La butée axiale 36b est formée par une surface saillante, s'étendant perpendiculairement de part et d'autre de la languette 36a, de sorte que l'organe de positionnement complémentaire 36 a une forme de T. La butée axiale 36b est par exemple située à une extrémité de la languette 36a de sorte à pouvoir visualiser l'appui en butée avec un insert, tel que la partie de mâchoire 20 et en l'occurrence avec la butée 28b de l'organe de positionnement 28.

Bien entendu, la butée axiale 36b de l'organe de positionnement complémentaire 36 n'est pas limitée à l'exemple représenté et peut être formée par tout autre moyen permettant d'arrêter le déplacement en translation d'un insert. Dans un mode de réalisation non représenté, la rainure 28a formée par l'organe de positionnement 28 est non débouchante et vient en butée avec une extrémité longitudinale de la languette 36a.

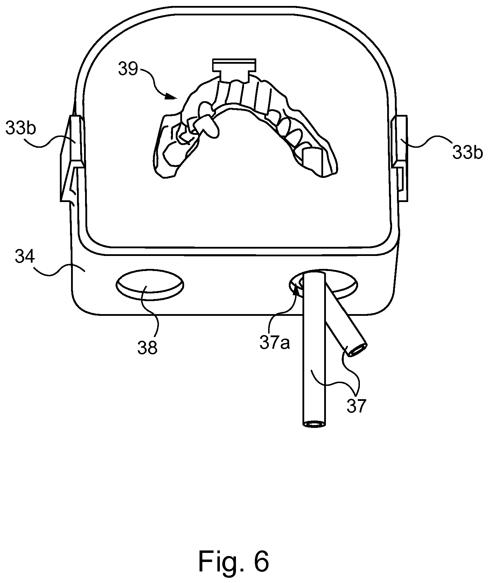

La figure 6 illustre l'empreinte 39 obtenue après séparation de la coquille complémentaire 34 et de la coquille 32 portant la partie de mâchoire 20, c'est-à-dire lorsque le moule en coquilles 30 est ouvert.

Selon l'exemple représenté, l'empreinte 39 est formée à partir du matériau introduit par les trous de coulée 38. De ce fait, dans le présent exemple, l'empreinte 39 est comprise intégralement dans la coquille complémentaire 34 du moule en coquilles 30.

Comme l'illustre également la figure 6, le procédé comporte une étape de perçage d'un canal d'alimentation 37a, formé depuis au moins l'un des trous de coulée 38 de la coquille complémentaire 34 et débouchant dans l'empreinte 39. Un tel canal d'alimentation 37a est par exemple réalisé à l'aide d'une canule 37b, par exemple une canule creuse, insérée par l'un des trous de coulée 38. De manière non limitative, le canal d'alimentation 37a débouche de préférence au niveau d'un partie gencive de l'empreinte 39.

Ainsi, un tel procédé permet de réaliser une empreinte en vue de réaliser une prothèse dentaire sur-mesure par moulage.

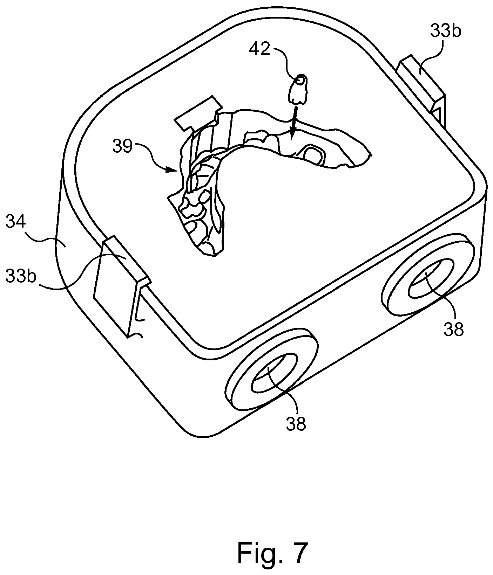

La figure 7 illustre une étape de positionnement d'au moins une dent artificielle 42 dans l'empreinte 39.

Par exemple ici, plusieurs dents artificielles 42 sont positionnées dans l'empreinte 39. Ces dents sont destinées à combler les édentations, représentées dans le modèle de réplique de dentition 1. Par conséquent, de telles dents artificielles 42 sont positionnées dans l'empreinte 39, aux emplacements correspondant aux dents préalablement conçues par le logiciel, tel que représenté en hachuré sur les figures 3A et 3B par exemple.

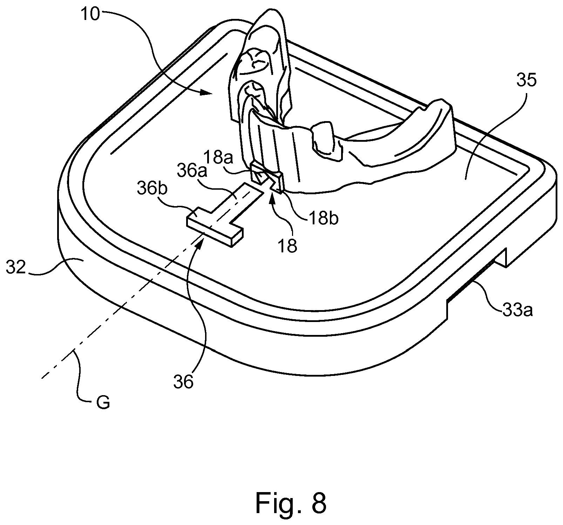

La figure 8 montre une étape de positionnement d'une réplique de dentition 10 sur la coquille 32 du moule en coquilles 30, de manière analogue à l'étape de positionnement de la partie de mâchoire 20 sur la coquille 32.

Par exemple, la réplique de dentition 10 est réalisée par fabrication additive, à partir du modèle de réplique de dentition 1, de manière analogue à la réalisation de la partie de mâchoire 20.

La réplique de dentition 10 comporte par conséquent un organe de positionnement 18, identique à l'organe de positionnement 28 de la partie de mâchoire 20.

En l'occurrence, l'organe de positionnement 18 comporte ici une rainure 18a. Selon l'exemple représenté, l'organe de positionnement 18 comporte également une butée 18b formé par la face avant de la partie de mâchoire 20.

L'organe de positionnement complémentaire 36 de la coquille 32 est donc configuré pour coopérer avec l'organe de positionnement 18 de la réplique de dentition 10. De cette manière, la réplique de dentition 10 est positionnée sur la coquille 32 de façon similaire, voire identique, à la partie de mâchoire 20. L'organe de positionnement complémentaire 36 est configuré pour former une liaison glissière, et un assemblage à queue d'aronde, avec l'organe de positionnement 18.

La liaison glissière permet ici un déplacement en translation de la réplique de dentition 10 selon l'axe longitudinal G de la languette 36a, c'est-à-dire parallèlement à la surface plane du fond 35 de la coquille 32.

L'assemblage à queue d'aronde sert à empêcher le mouvement de la réplique de dentition 10 dans une direction perpendiculaire à la surface plane du fond 35 de la coquille 32, et à maintenir en position la réplique de dentition 10 par exemple lors de la séparation de la coquille complémentaire 34 et de la coquille 32 après une étape de coulée d'un matériau de remplissage décrite plus en détail ci-dessous.

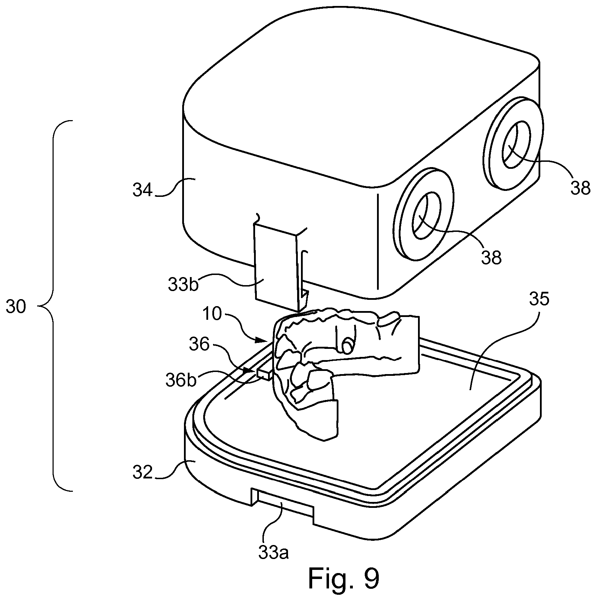

La figure 9 montre une étape de positionnement de la réplique de dentition 10 dans l'empreinte 39. Par exemple, cette étape comporte une étape de fermeture du moule en coquilles 30, par la coopération de la coquille 32 et de la coquille complémentaire 34, tandis que la réplique de dentition 10 est positionnée sur la coquille 32 et que l'empreinte 39 est dans la coquille complémentaire 34.

La réplique de dentition 10 forme une liaison étanche avec l'empreinte 39. Cela s'explique notamment par le fait que la partie inférieure de la partie de mâchoire 20 est identique à celle de la réplique de dentition 10.

Cependant, leur partie supérieure étant différente, la réplique de dentition 10 ne comble que partiellement l'empreinte 39, de sorte à former un volume résiduel dans l'empreinte 39. Ce volume résiduel est à la fois défini et délimité par l'empreinte 39, les dents artificielles 42 et la réplique de dentition 10.

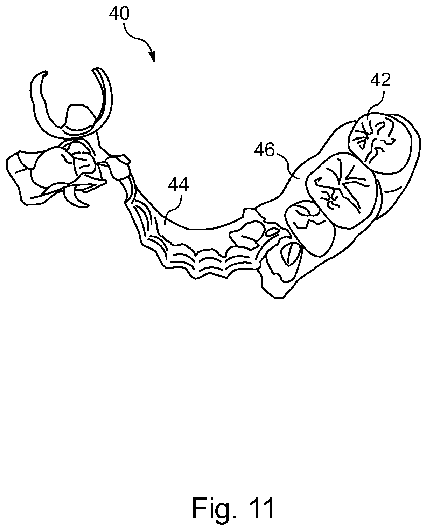

Dans le cas d'une prothèse dentaire partielle, ce volume est en outre défini par le châssis de stellite 44 (figure 11), préalablement positionné sur la réplique de dentition 10 avant la fermeture du moule en coquilles 30.

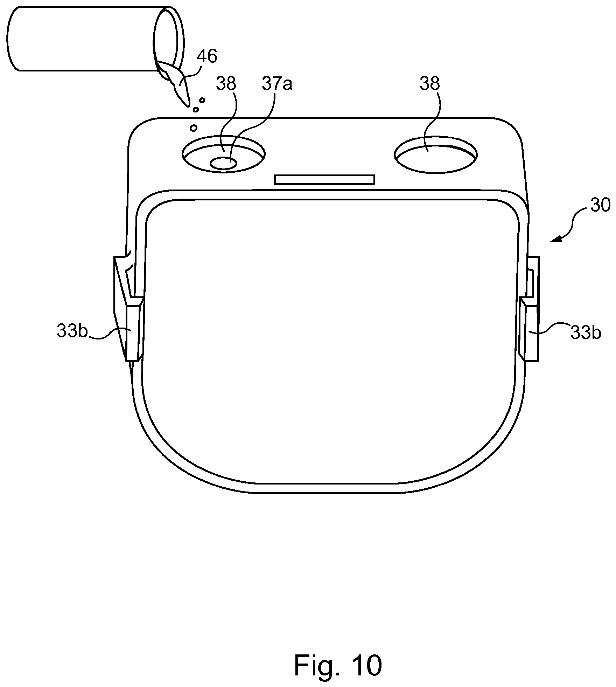

La figure 10 illustre une étape de coulée dans laquelle un matériau de remplissage 46 est introduit via au moins l'un des trous de coulées 38 dans le volume résiduel défini entre au moins la réplique de dentition 10 et l'empreinte 39. En l'occurrence, dans l'exemple représenté, le matériau de remplissage 46 est introduit via le canal d'alimentation 37a.

Lors de cette étape, le matériau de remplissage 46 entre en contact avec au moins une partie des dents artificielles 42 pour s'y lier, par exemple, par surmoulage. Il en est de même pour le châssis de stellite 44 dans le cas d'une prothèse partielle.

Le matériau de remplissage 46 peut être injecté sous pression ou par remplissage naturel gravitationnel, de sorte à s'ajuster au mieux aux parois du volume résiduel. Le matériau de remplissage 46 peut comprendre tout type de matériau connu pour la fabrication de prothèse dentaire, telle qu'une résine acrylique par exemple.

Le procédé comporte en outre une étape de séparation de la réplique de dentition 10 et de l'empreinte 39, voire par exemple d'ouverture du moule en coquilles 30, puis une étape d'extraction (non illustrée) d'un brut de décoffrage configuré pour former la prothèse dentaire.

Le procédé comporte aussi par exemple une étape de parachèvement qui peut comporter une étape de suppression d'une carotte d'injection correspondant au moulage du canal d'alimentation, et/ou une étape de finition consistant par exemple en un polissage et/ou un ébavurage et/ou un lustrage du brut de décoffrage.

La figure 11 illustre un exemple de prothèse 40 obtenue à l'issu de ce procédé selon un exemple de mise en œuvre. Selon l'exemple représenté, la prothèse 40 comporte les dents artificielles 42 et le châssis de stellite 44 qui sont liés au matériau de remplissage 46 solidifié formant une gencive.

Dans le présent exemple de réalisation, la prothèse dentaire 40 est une prothèse dentaire partielle. En effet, le châssis de stellite 44 relie deux parties comportant chacune au moins une dent artificielle 42 liée au matériau de remplissage 46 solidifié.

Des étapes d'ajustement peuvent être effectuées en positionnant la prothèse dentaire 40 sur la réplique de dentition 10, avant d'être inséré dans la bouche du patient.

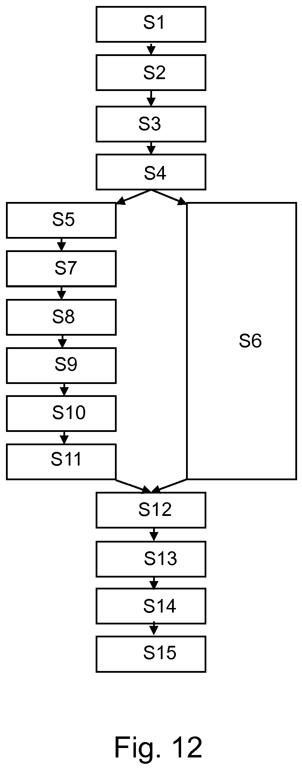

La figure 12 illustre schématiquement un exemple de mise en œuvre d'un procédé de fabrication d'une prothèse dentaire selon l'invention.

Selon cet exemple, le procédé comporte :
- une étape S1 de conception numérique du modèle de prothèse dentaire à réaliser à partir du modèle de réplique de dentition 1 d'un patient, comme illustré figure 1 ;
- une étape S2, dans laquelle le modèle d'organe de positionnement 8 est conçu numériquement dans le modèle de réplique de dentition 1 ;
- une étape S3 de parallélisation du modèle de réplique de dentition 1, dans laquelle des zones de contre-dépouilles sont comblées numériquement ;
- une étape S4 de génération du modèle de partie de mâchoire 2, comme illustré figures 3A et 3B, comportant le modèle de réplique de dentition 1 et le modèle de la prothèse dentaire assemblé audit modèle de réplique de dentition 1 ;
- une étape S5 consiste en la fabrication de la partie de mâchoire 20 à partir du modèle de partie de mâchoire 2 incluant un organe de positionnement 28, par exemple par fabrication additive ;
- une étape S6 consiste en la fabrication d'une réplique de dentition 10 à partir du modèle de réplique de dentition 1 incluant un organe de positionnement 18, par exemple par fabrication additive ;
- une étape S7, comme illustré figure 4, de positionnement de la partie de mâchoire 20 sur une coquille 32 d'un moule en coquilles 30 par coopération de l'organe de positionnement 28 de la partie de mâchoire 20 avec l'organe de positionnement complémentaire 36 ménagé dans ladite coquille 32 ;
- une fois que la partie de mâchoire 20 est positionnée sur la coquille 32, le moule en coquilles 30 est fermé lors d'une étape S8, illustrée par la figure 5 ;
- une étape S9 de réalisation d'une empreinte 39 de la partie de mâchoire est ainsi réalisée 20 par injection d'un matériau dans le moule en coquilles 30. Cette étape donne lieu à la formation d'une empreinte 39 de la partie de mâchoire ;
- une étape S10 de perçage d'un canal d'alimentation débouchant dans l'empreinte (39) ;
- une étape S11 de positionnement d'au moins une dent artificielle dans l'empreinte de la partie de mâchoire 20, comme illustré figure 7 ;
- une étape S12, représentée par exemple par la figure 8, de positionnement de la réplique de dentition 10 sur la coquille 32 du moule en coquilles 30 par coopération de l'organe de positionnement 18 de la réplique de dentition 10 avec l'organe de positionnement complémentaire 36 de la coquille 32 ;
- une étape S13 de positionnement d'un châssis de stellite 44 sur la réplique de dentition 10, lorsqu'il s'agit d'une prothèse dentaire partielle.
- une étape S14, représentée par exemple par la figure 9, de positionnement de la réplique de dentition 10 dans l'empreinte 39 dans laquelle l'au moins une dent artificielle 42 est positionnée ;
- une étape S15, illustrée par exemple figure 10, de coulée d'un matériau de remplissage 46 dans un volume résiduel défini par l'empreinte 39, l'au moins une dent artificielle 42 et la réplique de dentition 10.

## Revendications

1. Procédé de fabrication d'une prothèse dentaire, ledit procédé comprenant les étapes successives suivantes :
- une étape de conception numérique d'un modèle de prothèse dentaire (4) à réaliser à partir d'un modèle de réplique de dentition (1) d'un patient ;
- une étape de génération d'un modèle de partie de mâchoire (2) comportant le modèle de réplique de dentition (1) et le modèle de la prothèse dentaire (4) assemblé audit modèle de réplique de dentition (1);
- une étape de conception numérique d'un modèle d'organe de positionnement (8) dans le modèle de réplique de dentition (1);
- une étape de fabrication d'une partie de mâchoire (20) comportant un organe de positionnement (28) à partir du modèle de partie de mâchoire (2) incluant un modèle d'organe de positionnement (8);
- une étape de fabrication d'une réplique de dentition (10) comportant un organe de positionnement (18) à partir du modèle de réplique de dentition (1) incluant le modèle d'organe de positionnement (8);
- une étape de positionnement de la partie de mâchoire (20) sur une coquille (32) d'un moule en coquilles (30) par coopération de l'organe de positionnement (28) de la partie de mâchoire (20) avec un organe de positionnement complémentaire (36) ménagé dans ladite coquille (32);
- une étape de fermeture du moule en coquilles (30);
- une étape de réalisation d'une empreinte (39) de la partie de mâchoire (20) par injection d'un matériau dans le moule en coquilles (30);
- une étape de positionnement d'au moins une dent artificielle (42) dans l'empreinte (39) de la partie de mâchoire (20);
- une étape de positionnement de la réplique de dentition (10) sur la coquille (32) du moule en coquilles (30) par coopération de l'organe de positionnement (18) de la réplique de dentition (10) avec l'organe de positionnement complémentaire (36) de la coquille (32) ;
- une étape de positionnement de la réplique de dentition (10) dans l'empreinte (39) dans laquelle l'au moins une dent artificielle (42) est positionnée, la réplique de dentition (10) ne comblant que partiellement l'empreinte (39), de sorte à former un volume résiduel dans l'empreinte (39) ; et
- une étape de coulée d'un matériau de remplissage (46) dans le volume résiduel formé dans l'empreinte (39), l'au moins une dent artificielle (42) et la réplique de dentition (10).

2. Procédé selon la revendication 1, dans lequel l'organe de positionnement (18, 28) coopère selon une liaison glissière avec l'organe de positionnement complémentaire (36) ménagé sur la coquille (32).

3. Procédé selon l'une quelconque des revendications 1 ou 2, dans lequel l'étape de fabrication de la réplique de dentition (10) est précédée d'une étape de parallélisation du modèle de réplique de dentition (1), dans laquelle des zones de contre-dépouilles sont comblées numériquement.

4. Procédé selon l'une quelconque des revendications 1 à 3, dans lequel l'étape de positionnement de la réplique de dentition (10) dans l'empreinte (39) est précédée d'une étape de positionnement d'un châssis de stellite (44) sur la réplique de dentition (10).

5. Procédé selon l'une quelconque des revendications 1 à 4, comportant en outre une étape de perçage d'un canal d'alimentation (37a) débouchant dans l'empreinte (39).

6. Procédé selon l'une des revendications 1 à 5, dans lequel l'étape de fabrication de la partie de mâchoire (20) et/ou de la réplique de dentition (10) est réalisée par fabrication additive.

7. Procédé selon la revendication 6, dans lequel l'étape de fabrication de la partie de mâchoire (20) et/ou de la réplique de dentition (10) est réalisée selon un procédé comprenant une succession d'ajouts de matériau par jets sur un support d'impression, en couches successives, le matériau étant solidifié par photopolymérisation après chaque jet.

8. Moule en coquilles de fabrication d'une prothèse dentaire, dans lequel une coquille (32) comporte un fond (35) définissant une surface plane et un organe de positionnement complémentaire (36) disposé sur le fond et étant configuré pour coopérer avec un organe de positionnement (18, 28) d'un insert (10, 20) à positionner sur le fond (35) du moule en coquilles (30), **caractérisé en ce que** ledit organe de positionnement complémentaire (36) est configuré pour former un assemblage à queue d'aronde avec ledit organe de positionnement (18, 28) empêchant un mouvement de l'insert dans une direction hors plan, et **en ce que** l'organe de positionnement complémentaire (36) comporte une butée axiale (36b).

9. Moule en coquilles selon la revendication 8, **caractérisé en ce que** l'organe de positionnement complémentaire (36) est configuré pour former une liaison glissière avec l'organe de positionnement (18, 28) de l'insert (10, 20).

10. Moule en coquilles selon la revendication 8 ou 9, **caractérisé en ce que** ledit organe de positionnement complémentaire (36) est configuré pour former une partie mâle de l'assemblage à queue d'aronde.

11. Moule en coquilles selon l'une quelconque des revendications 8 à 10, **caractérisé en ce que** ledit organe de positionnement complémentaire (36) comporte une languette (36a) configurée pour coopérer avec ledit organe de positionnement (18, 28).

12. Moule en coquilles selon la revendication 11, **caractérisé en ce que** la butée axiale (36b) est formée par une surface saillante, s'étendant perpendiculairement de part et d'autre de ladite languette (36a), de sorte que l'organe de positionnement complémentaire (36) a une forme de T.

## Patentansprüche

1. Verfahren zum Herstellen eines Zahnersatzes, wobei das Verfahren die folgenden aufeinanderfolgenden Schritte umfasst:
- einen Schritt zum digitalen Entwerfen eines Zahnersatzmodells (4), das auf Basis eines Gebissreplikatmodells (1) eines Patienten hergestellt werden soll;
- einen Schritt zum Erzeugen eines Kieferteilmodells (2), das das Gebissreplikatmodell (1) und das Zahnprothesenmodell (4) aufweist, das an dieses Gebissreplikatmodell (1) montiert ist;
- einen Schritt zum digitalen Entwerfen eines Positionierungselementmodells (8) in dem Gebissreplikatmodell (1);
- einen Schritt zum Herstellen eines Kieferteils (20), das ein Positionierungselement (28) auf Basis des Kieferteilmodells (2) aufweist, das ein Positionierungselementmodell (8) enthält;
- einen Schritt zum Herstellen eines Gebissreplikats (10), das ein Positionierungselement (18) auf Basis des Gebissreplikatmodells (1) aufweist, das das Modell des Positionierungselements (8) enthält;
- einen Schritt zum Positionieren des Kieferteils (20) auf einer Schale (32) einer Schalenform (30) durch Zusammenwirken des Positionierungselements (28) des Kieferteils (20) mit einem in der Schale (32) vorgesehenen ergänzenden Positionierungselement (36);
- einen Schritt zum Schließen der Schalenform (30);
- einen Schritt zum Herstellen eines Abdrucks (39) des Kieferteils (20) durch Einspritzen eines Materials in die Schalenform (30);
- einen Schritt zum Positionieren mindestens eines künstlichen Zahns (42) in dem Abdruck (39) des Kieferteils (20);
- einen Schritt zum Positionieren des Gebissreplikats (10) auf der Schale (32) der Schalenform (30) durch Zusammenwirken des Positionierungselements (18) des Gebissreplikats (10) mit dem ergänzenden Positionierungselement (36) der Schale (32);
- einen Schritt zum Positionieren des Gebissreplikats (10) in dem Abdruck (39), in dem der mindestens eine künstliche Zahn (42) positioniert ist, wobei das Gebissreplikat (10) den Abdruck (39) nur teilweise ausfüllt, sodass ein Restvolumen in dem Abdruck (39) gebildet wird; und
- einen Schritt zum Gießen eines Füllmaterials (46) in das durch den Abdruck (39), den mindestens einen künstlichen Zahn (42) und das Gebissreplikat (10) definierte Restvolumen.

2. Verfahren nach Anspruch 1, wobei das Positionierungselement (18, 28) in einer Gleitverbindung mit dem an der Schale (32) vorgesehenen ergänzenden Positionierungselement (36) zusammenwirkt.

3. Verfahren nach einem der Ansprüche 1 oder 2, wobei dem Schritt zum Herstellen des Gebissreplikats (10) ein Schritt zum Parallelisieren des Gebissreplikatmodells (1) vorausgeht, bei dem Unterschnittbereiche digital ausgefüllt werden.

4. Verfahren nach einem der Ansprüche 1 bis 3, wobei dem Schritt zum Positionieren des Gebissreplikats (10) in den Abdruck (39) ein Schritt des Positionierens eines Stellit-Rahmens (44) auf dem Gebissreplikat (10) vorausgeht.

5. Verfahren nach einem der Ansprüche 1 bis 4, das ferner einen Schritt des Bohrens eines in den Abdruck (39) mündenden Versorgungskanals (37a) aufweist.

6. Verfahren nach einem der Ansprüche 1 bis 5, wobei der Schritt zum Herstellen des Kieferteils (20) und/oder des Gebissreplikats (10) durch additive Herstellung erfolgt.

7. Verfahren nach Anspruch 6, wobei der Schritt zum Herstellen des Kieferteils (20) und/oder des Gebissreplikats (10) nach einem Verfahren durchgeführt wird, das eine Abfolge von Materialzugaben durch Strahlen auf ein Druckmedium in aufeinanderfolgenden Schichten umfasst, wobei das Material nach jedem Strahl durch Lichtpolymerisation verfestigt wird.

8. Schalenform zum Herstellen eines Zahnersatzes, wobei eine Schale (32) einen Boden (35) aufweist, der eine ebene Oberfläche und ein an dem Boden angeordnetes ergänzendes Positionierungselement (36) definiert und so eingerichtet ist, dass es mit einem Positionierungselement (18, 28) eines auf dem Boden (35) der Schalenform (30) zu positionierenden Einsatzes (10, 20) zusammenwirkt, **dadurch gekennzeichnet, dass** das ergänzende Positionierungselement (36) so eingerichtet ist, dass es eine Schwalbenschwanzbaugruppe mit dem Positionierungselement (18, 28) bildet, die eine Bewegung des Einsatzes in einer außerplanaren Richtung verhindert, und dass das ergänzende Positionierungselement (36) einen axialen Anschlag (36b) aufweist.

9. Schalenform nach Anspruch 8, **dadurch gekennzeichnet, dass** das ergänzende Positionierungselement (36) so eingerichtet ist, dass es eine Gleitverbindung mit dem Positionierungselement (18, 28) des Einsatzes (10, 20) bildet.

10. Schalenform nach Anspruch 8 oder 9, **dadurch gekennzeichnet, dass** das ergänzende Positionierungselement (36) so eingerichtet ist, dass es einen Steckerteil der Schwalbenschwanzbaugruppe bildet.

11. Schalenform nach einem der Ansprüche 8 bis 10, **dadurch gekennzeichnet, dass** das ergänzende Positionierungselement (36) eine Lasche (36a) aufweist, die so eingerichtet ist, dass sie mit dem Positionierungselement (18, 28) zusammenwirkt.

12. Schalenform nach Anspruch 11, **dadurch gekennzeichnet, dass** der Axialanschlag (36b) durch eine vorstehende Fläche gebildet ist, die sich senkrecht auf beiden Seiten der Lasche (36a) erstreckt, sodass das ergänzende Positionierungselement (36) eine T-Form aufweist.

## Claims

1. A method for manufacturing a dental prosthesis, said method comprising the following successive steps:
- a step of digitally designing a dental prosthesis model (4) to be made from a dentition replica model (1) of a patient;
- a step of generating a jaw part model (2) comprising the dentition replica model (1) and the dental prosthesis model (4) assembled to said dentition replica model (1);
- a step of digitally designing a positioning member model (8) in the dentition replica model (1);
- a step of manufacturing a jaw part (20) comprising a positioning member (28) from the jaw part model (2) including a positioning member model (8);
- a step of manufacturing a dentition replica (10) comprising a positioning member (18) from the dentition replica model (1) including the positioning member model (8);
- a step of positioning the jaw part (20) on a shell (32) of a shell mould (30) by cooperation of the positioning member (28) of the jaw part (20) with a complementary positioning member (36) provided in said shell (32);
- a step of closing the shell mould (30);
- a step of making an impression (39) of the jaw part (20) by injecting a material into the shell mould (30);
- a step of positioning at least one artificial tooth (42) in the impression (39) of the jaw part (20);
- a step of positioning the dentition replica (10) on the shell (32) of the shell mould (30) by cooperation of the positioning member (18) of the dentition replica (10) with the complementary positioning member (36) of the shell (32);
- a step of positioning the dentition replica (10) in the impression (39) in which the at least one artificial tooth (42) is positioned, the dentition replica (10) only partially filling the impression (39), so as to form a residual volume in the impression (39); and
- a step of pouring a filling material (46) into the residual volume defined by the impression (39), the at least one artificial tooth (42) and the dentition replica (10).

2. The method according to claim 1, wherein the positioning member (18, 28) cooperates in a sliding connection with the complementary positioning member (36) provided on the shell (32).

3. The method according to any one of claims 1 or 2, wherein the step of manufacturing the dentition replica (10) is preceded by a step of parallelising the dentition replica model (1), wherein undercut zones are digitally filled.

4. The method according to any one of claims 1 to 3, wherein the step of positioning the dentition replica (10) in the impression (39) is preceded by a step of positioning a stellite denture-skeleton (44) on the dentition replica (10).

5. The method according to any one of claims 1 to 4, further comprising a step of piercing a feed channel (37a) opening into the impression (39).

6. The method according to one of claims 1 to 5, wherein the step of manufacturing the jaw part (20) and/or the dentition replica (10) is carried out by additive manufacturing.

7. The method according to claim 6, wherein the step of manufacturing the jaw part (20) and/or the dentition replica (10) is carried out according to a method comprising a succession of additions of material by jets on a printing medium, in successive layers, the material being solidified by photopolymerisation after each jet.

8. A shell mould for manufacturing a dental prosthesis, wherein a shell (32) comprises a bottom (35) defining a planar surface and a complementary positioning member (36) disposed on the bottom and being configured to cooperate with a positioning member (18, 28) of an insert (10, 20) to be positioned on the bottom (35) of the shell mould (30), **characterised in that** said complementary positioning member (36) is configured to form a dovetail assembly with said positioning member (18, 28) preventing movement of the insert in a direction outof the plane, and **in that** the complementary positioning member (36) comprises an axial stop (36b).

9. The shell mould according to claim 8, **characterised in that** the complementary positioning member (36) is configured to form a slide connection with the positioning member (18, 28) of the insert (10, 20).

10. The shell mould according to claim 8 or 9, **characterised in that** said complementary positioning member (36) is configured to form a male part of the dovetail assembly.

11. The shell mould according to any one of claims 8 to 10, **characterised in that** said complementary positioning member (36) comprises a tongue (36a) configured to cooperate with said positioning member (18, 28).

12. The shell mould according to claim 11, **characterised in that** the axial stop (36b) is formed by a protruding surface, extending perpendicularly on either side of said tongue (36a), thereby giving the complementary positioning member (36) a T-shape.
